# EUROPEAN PATENT SPECIFICATION

(11) **EP 0 611 910 B1**
(45) Date of publication and mention of the grant of the patent: **22.10.1997**
(21) Application number: 94301196.5
(22) Date of filing: 18.02.1994
(51) Int. Cl.: F16L 55/172, F16L 21/06

(54) **Pipe coupling**
Rohrverbindung
Raccord de tuyaux

(30) Priority: 18.02.1993 GB 9303237
(43) Date of publication of application: 24.08.1994
(73) Proprietor: THE VICTAULIC COMPANY OF JAPAN LIMITED, Chiyoda-ku, Tokyo 100 (JP)
(72) Inventor: Ikeda, Shintaro, Kusatsu-shi, Shiga-ken 525 (JP)
(74) Representative: Dean, John Paul

(56) References cited:
- AU-B- 505 895
- FR-A- 2 605 378
- GB-A- 740 433
- GB-A- 1 523 882
- GB-A- 2 174 155
- GB-A- 2 189 000
- US-A- 3 954 288
- US-A- 4 652 023

## Description

This invention relates to a pipe coupling and particularly, though not exclusively to a pipe coupling that permits the simple, precise repair of leaky joints or piping of a laid pipeline without interrupting water passage or gas supply.

It is known, for example from US-A-3954288, to provide a pipe coupling comprising two complementary portions which are bolted around a join in a pipe and which seal with the pipe. US-A-3954288 also discloses forming an interspace between first and second gaskets and pressurising the interspace to check the integrity of the seal.

Water services pipes and gas pipes may, due to the passage of time, leak as a result of: cracks and wear due to aging; corrosion and damage to packing, pipes and joint materials; or degradation of welding.

The conventional method adopted for repairing such leakage is to replace faulty portions.

In some cases, filing material is packed into the portions where leakage occurred.

Such a method of replacing faulty portions can indeed attain a repair. However, when water or gas passes through a pipeline, this flow must be interrupted, resulting in disruption and inconvenience to consumers living in all downstream areas.

Furthermore, to replace a faulty pipe member, operations must necessarily be performed on the adjacent members connected thereto. Therefore, such replacement requires a considerable number of man hours, and is especially labour-intensive in the case of underground pipes.

The method of packing filling material into leaking portions is primitive. When it is difficult to stop effectively leakage due to aging or corrosion, this method will result in further deterioration of the leaking portions. In particular, this method can be rarely adopted these days for a pipeline used at very high pressures.

Such repair is naturally temporary and unsightly and further repair must be executed within a short time.

According to the present invention, there is provided a pipe coupling for use in repairing a leak in a pipe, the coupling comprising first and second complementary housings, each housing having an associated unitary seal comprising two interconnected semi-annular portions which, in use, cooperate with each other to form a seal between pipe sections on opposing sides of the joint and with the housings, characterised in that the housings cooperate to define a chamber of sufficient size to accommodate a pre-existing pipe joint.

Preferably a holding portion is formed on the internal diameter side of a divided end face in said individual housings to receive projecting seals interconnecting the semi-annular portions. The semi-annular portions cooperate, in use to form ring seals. The projecting seals act to stably fit the ring seals into the housing.

The ring seals fitted into the housings as described above form multiple ring seals in a single unit between both ends of said projecting seals, thereby permitting the ring seals to surround the portion being repaired and to be fitted to the pipe body.

The above housings fitted to the pipe portion under repair as described above are provided with a blocking plug for removably blocking a hole to allow testing of the sealing condition after fitting the coupling to the pipe body. Testing may be performed by removing the blocking plug and applying pressurised liquid or air, or performing pressure reduction by suction after fixing to the portion being repaired. Thus a precise repair can be made.

Fixing of the housings and ring seals as described above can be smoothly performed due to the separable construction of the coupling while a fluid is passed through the pipeline being repaired.

Clamping seats are provided on the separate housings either side of an expanded section formed in the middle of each housing. The expanded sections cooperate to define a chamber to accommodate the clamping seats of an existing joint provided in the pipe body being repaired, thereby permitting repair at the joint section of a laid pipeline.

The present invention will further be described, by way of example only, with reference to the accompanying drawings, wherein:
Fig. 1 is a fragmentary broken oblique section view indicating an example of the application of the present invention;
Fig. 2 is an oblique view showing the ring seal of Fig. 1 in disassembled state and the housing on one side;
Fig. 3 is a fragmentary broken oblique sectional view, similar to Fig. 1, of another embodiment of this invention; and
Fig. 4 is an oblique view, similar to Fig. 2, of the same embodiment shown in Fig. 3.

In these figures, 1 is a housing, 2 is a ring seal, 3 is a bolt, 4 is a nut of an existing joint, 5 is an existing joint, 6 is a pipeline, 11 is a receiving groove, 12 is an end face, 13 is a holding wall, 14 and 14a are clamping seats, 15 is an enlarged portion for accommodating a pre-existing joint, 16 is a cut portion, 17 and 18 are plugs, 21 and 21a are ring seals, 22 is a projecting seal portion, 22a is the lateral face of the projecting seal, 23 is a groove, 24 is a lip, 25 is a plane end face, and 51 is a clamping seal of the existing joint.

Referring more particularly to the embodiments of the present invention described above as disclosed in the accompanying drawings:

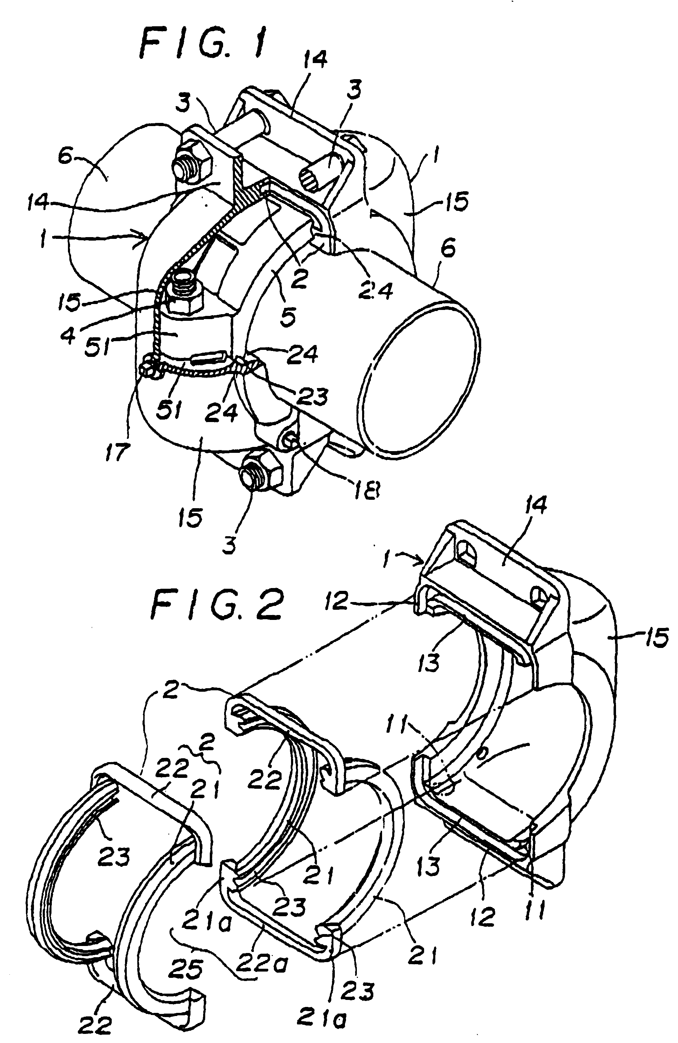

As shown in Fig. 1, the pipe coupling comprises the separate housings 1 and 1 and rings seals 2 and 2 which, in use, are accommodated in the receiving groove 11 shown in Fig. 2. Projecting seal portions 22 are held within the groove 11 which is bounded by a holding wall 13 formed on the radially innermost side on the separate end face 12 of each housing. The seals comprise a projecting seal 22 formed at each separate end of the ring seal 2, and circular arc ring seals 21 and 21 between both ends of the projecting seals 22 and 22 in each ring seal 2.

A clamping seat 14 is formed on the radially outer side of the separate end face 12 of each housing. The bolts and nuts 3 shown in Fig. 1 are passed through these clamping seats and tightened as shown in the figure.

In the middle part of each housing 1, the clamping seat accommodating portion 15 is expanded to accommodate the clamping seat 51 of the pre-existing joint 5 in the laid pipeline 6.

A pressurising plug 17 and air outlet plug 18 are arranged in one or both of the housings 1 so that testing can be performed using pressurised water or air to check the sealing condition by pressurisation or pressure reduction after the pipe coupling is installed.

In the above ring seal 2 shown in Figs. 1 and 2, a concave groove 23 is formed in the circular arc ring seals 21 facing toward the side face 51 of the pre-existing joints 5. That is, it is constructed so as to attain junction sealing at the lips 24 and 24 on both sides of the groove 23, and a double seal can be formed against leakage from the pipe body side.

A series of plane end faces 25 are formed over the lateral face 22a of the projecting seal 22 and the end face 21a of the ring seal 21. These plane end faces 25 and 25 can be stably junction-sealed by clamping the housings 1 and 1.

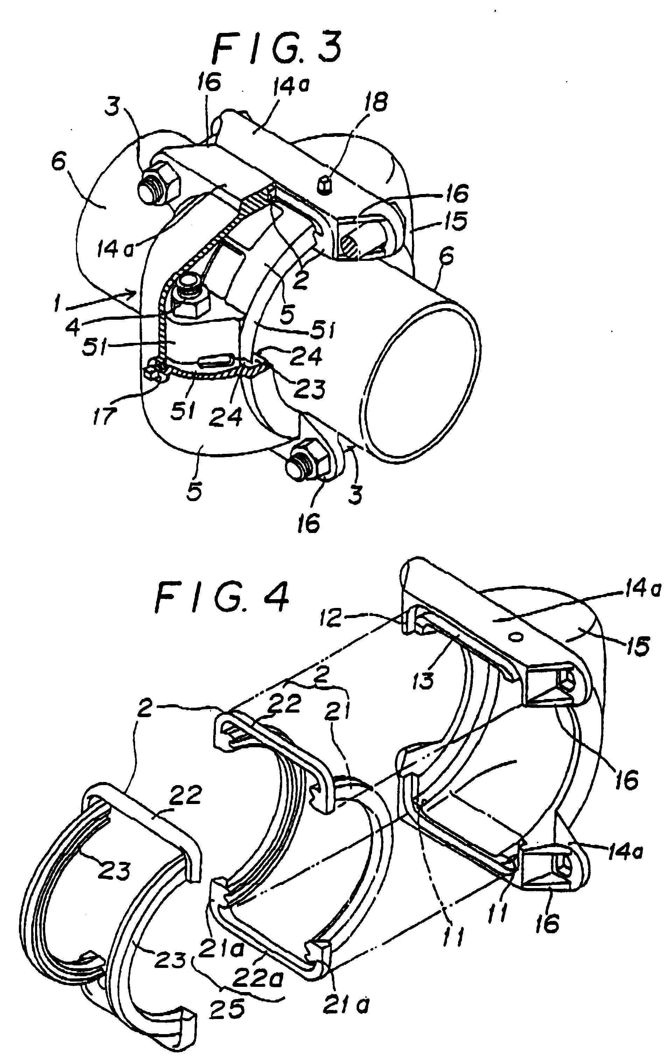

The clamping seat 14 in the housing 1 may be formed in projecting form as a unit in the width wise direction of the separable end face 12 as shown in Figs. 3 and 4, instead of providing a radially outwardly projecting clamping seat as shown in Figs. 1 and 2. In addition, a cut portion 16 may be formed in the passage portion for the bolts and nuts 3 at both ends of this clamping seat 14a, as shown in Figs. 3 and 4.

The plug 17 or 18 can be provided on the clamping seat 14a shown in Figs. 3 and 4. Even in this construction, the mounting details of the ring seal 2 remain as hereinbefore described.

The difference between the embodiments shown in Figs. 1 and 2 and in Figs. 3 and 4 is the position of the bolts and nuts 3 and 3, namely; whether they are tightly fixed on the outer side in the widthwise direction of the housings 1 and 1 or on the outer side in the radial direction of the housings 1 and 1. The choice of embodiment should be adopted in consideration of the space conditions on the peripheral side of the pipeline to which the coupling of the present invention is applied.

Furthermore, the existing joint 5 in the laid pipeline 6 is generally separated in the horizontal direction and tightly fixed with bolts in the vertical direction as shown in figures 1 and 3. Accordingly, the pipe coupling of the present invention is designed to be used with the separable end face 12 in the vertical direction of the pipeline 6 and installed as shown in the figures. The bolt and nut 3 are inserted in the horizontal direction to prevent the housings 1 and 1 from enlarging in the transverse direction.

The clamping seat 14 of the housings 1 and 1 comprises the fitting projection portion and the opening to receive said fitting projection portion which is mutually fixed. This construction does not require insertion or tightening operations for the bolts and nuts 3 on the bottom surface of the laid and connected pipeline 6.

In the case where the present invention is applied to repair portions of a damaged pipeline 6, not having joints in those portions, the groove 23 and lips 24 and 24 in the ring seal 2 can be formed in the direction facing toward the outer surface of the pipeline, and the width of the housing 1 can be formed in an adequately large size.

## Claims

1. A pipe coupling for use in repairing a leak in a pipe, the coupling comprising first and second complementary housings (1), each housing (1) having an associated unitary seal comprising two interconnected semi-annular portions (21) which, in use, cooperate with each other to form a seal between pipe sections on opposing sides of the joint and with the housings (1), characterised in that the housings cooperate to define a chamber of sufficient size to accommodate a pre-existing pipe joint.

2. A pipe coupling as claimed in claim 1, characterised by a holding portion formed on an internal diameter side of a divided end face (25) of the individual housings (1), in which the holding portion is arranged to receive projecting seals (22) interconnecting the semi-annular portions, the semi-annular portions of the opposing housings cooperate, in use, to form ring seals, and a blocking plug is provided in said housing for removably blocking a hole to test the sealing conditions after fixing to the pipe.

3. A pipe coupling as claimed in claim 2, characterised in that the lateral faces (22a) of the projecting seals parts and semi-annular portions (21c) are planar.

4. A pipe coupling according to claims 1, 2 or 3, wherein a groove (23) is formed in the centre of the side face of the inner side of the semi-annular portions (21) forming the ring seal, and lips (24) are provided on both sides of the groove (23) so that said lips (24) contact a side face (51) of the clamping seats of the existing pipe joint (5).

## Patentansprüche

1. Rohrverbindung zum Gebrauch beim Reparieren eines Lecks in einem Rohr, wobei die Verbindung erste und zweite komplementäre Gehäuse (1) umfaßt, wobei jedes Gehäuse (1) eine zugeordnete unitäre Dichtung aufweist, die zwei miteinander verbundene halbringförmige Abschnitte (21) umfaßt, welche beim Gebrauch miteinander kooperieren, um eine Dichtung zwischen Rohrabschnitten an gegenüberliegenden Seiten der Verbindung und mit den Gehäusen (1) zu bilden, dadurch gekennzeichnet, daß die Gehäuse kooperieren, um eine Kammer von genügender Größe zu definieren, um eine vorher vorhandene Rohrverbindung unterzubringen.

2. Rohrverbindung wie in Anspruch 1 beansprucht, gekennzeichnet durch einen Halteabschnitt, der an einer Innendurchmesserseite einer geteilten Endfläche (25) der individuellen Gehäuse (1) ausgebildet ist, in welchen der Halteabschnitt vorgesehen ist, um vorstehende Dichtungen (22) aufzunehmen, die die halbringförmigen Abschnitte miteinander verbinden, wobei die halbringförmigen Abschnitte der gegenüberliegenden Gehäuse beim Gebrauch zum Bilden von Ringdichtungen kooperieren und wobei ein Sperrbolzen zum aufhebbaren Versperren eines Lochs in dem Gehäuse vorgesehen ist, um die Dichtbedingungen nach dem Befestigen an dem Rohr zu prüfen.

3. Rohrverbindung wie in Anspruch 2 beansprucht, dadurch gekennzeichnet, daß die seitlichen Flächen (22a) der vorstehenden Dichtungsteile und halbringförmigen Abschnitte (21c) eben sind.

4. Rohrverbindung nach den Ansprüchen 1, 2 oder 3, worin eine Nut (23) in der Mitte der Seitenfläche der inneren Seite der halbringförmigen Abschnitte (21), die die Ringdichtung bilden, ausgebildet ist und Lippen (24) auf beiden Seiten der Nut (23) vorgesehen sind, so daß die Lippen (24) eine Seitenfläche (51) der Klemmsitze der vorhandenen Rohrverbindung (5) kontaktieren.

## Revendications

1. Raccord de tuyau pour l'utilisation dans la réparation d'une fuite dans un tuyau, le raccord comprenant des premier et second logements complémentaires (1), chaque logement (1) comportant un joint d'étanchéité unitaire associé, constitué de deux portions semi-circulaires reliées entre elles (21) qui, dans l'utilisation, coopèrent entre elles pour former un joint d'étanchéité entre des sections de tuyaux sur les côtés opposés du manchon-raccord et avec les logements (1), caractérisé en ce que les logements coopèrent pour définir une chambre de taille suffisante pour recevoir un manchon-raccord de tuyau préexistant.

2. Raccord de tuyau selon la revendication 1, caractérisé par une portion de maintien en position formée sur un côté du diamètre interne d'une face d'extrémité divisée (25) des logements individuels (1), dans lequel la portion de maintien en position est apte à recevoir des joints d'étanchéité en saillie (22) reliant entre elles les portions semi-circulaires, les portions semi-circulaires des logements opposés coopèrent, dans l'utilisation, pour former des joints d'étanchéité annulaires, et un bouchon d'obturation est prévu dans le logement pour obturer de façon amovible un trou et tester les conditions d'étanchéité après la fixation sur le tuyau.

3. Raccord de tuyau selon la revendication 2, caractérisé en ce que les faces latérales (22a) des parties de joint d'étanchéité en saillie et des portions semi-annulaires (21c) sont planes.

4. Raccord de tuyau selon les revendications 1, 2 ou 3, dans lequel il est ménagé une gorge (23) au centre de la face latérale du côté interne des portions semi-circulaires (21) formant le joint d'étanchéité annulaire et des lèvres (24) sont disposées des deux côtés de la gorge (23) de sorte que les lèvres (24) viennent en contact avec une face latérale (51) des sièges de serrage du manchon-raccord de tuyau existant (5).
